# EUROPÄISCHE PATENTSCHRIFT

(11) **EP 0 580 970 B1**
(45) Veröffentlichungstag und Bekanntmachung des Hinweises auf die Patenterteilung: **13.12.1995**
(21) Anmeldenummer: 93107447.0
(22) Anmeldetag: 07.05.1993
(51) Int. Cl.: F16H 59/10, F16H 61/22

(54) **Vorrichtung zur Verriegelung des Zündschlüssels eines Kraftfahrzeuges mit dem Wählhebel eines Automatikgetriebes**
Device for locking the ignition key of a motor vehicle by means of the lever of an automatic transmission
Dispositif de verrouillage de la clé d'allumage d'un véhicule automobile au moyen du levier d'une boîte vitesse automatique

(30) Priorität: 30.07.1992 DE 4225182
(43) Veröffentlichungstag der Anmeldung: 02.02.1994
(73) Patentinhaber: Dr.Ing.h.c. F. Porsche Aktiengesellschaft, 70435 Stuttgart (DE)
(72) Erfinder: Knape, Dieter, W-7100 Heilbronn (DE)

(56) Entgegenhaltungen:
- EP-A- 0 334 672
- DE-A- 3 943 011
- US-A- 4 474 085
- US-A- 5 085 096

## Beschreibung

Die Erfindung betrifft eine Vorrichtung zur Verriegelung des Zündschlüssels eines Kraftfahrzeuges mit dem Wählhebel eines Automatikgetriebes nach dem Oberbegriff des Anspruchs 1.

Eine derartige Verriegelungsvorrichtung ist aus der US-A 5,085,096 bekannt. Der Wählhebel mit einer Druckstange zur Verriegelung in den unterschiedlichen Wählpositionen wirkt mit einer Kurvenscheibe zusammen, die zwei Kurvenbahnen aufweist, die mit Führungselementen des Wählhebels zusammenwirken. Diese Kurvenscheibe ist achsparallel zum Wählhebel gelagert. Auf dieser Achse ist eine zweite Kurvenscheibe gelagert, die über eine Federverbindung und eine Langlochführung mit der ersten Kurvenscheibe verbunden ist. An dieser zweiten Kurvenscheibe greift der mit dem Zündschloß verbundene Seilzug an. Eine derartige Anordnung ist aufgrund der vielen relativ zueinander beweglichen Bauteile sowie dem Wirksamwerden zweier mit dem Wählhebel zusammenwirkender Kurvenbahnen sehr anfällig im Hinblick auf hohe Betätigungskräfte, insbesondere bei Mißbrauch, und erfordert weiterhin ein hohes Maß an Genauigkeit, um ein für den sicheren Betrieb ausreichend kleines Spiel der bewegten Bauteile sicherzustellen.

Aus der DE 39 11 570 C1 ist weiterhin eine Verriegelungsvorrichtung bekannt, bei der ein Sensorsignal für die Stellung des Zündschlüssels in eine Logikschaltung eingeht, die einen Hubmagnet steuert. Der Hubmagnet verstellt eine Klinke, in deren Vertiefungen ein Verriegelungsglied des Wählhebels eingreift. Der verschwenkbare Wählhebel ist in bekannter Weise in den Stellungen P = Parken, R = Rückwärtsgang, N = Neutralstellung, D = Drive (Fahrt), 2 = 2. Gang, 1 = 1. Gang mechanisch verrastbar. Mit einer solchen Verriegelung soll erreicht werden, daß der Zündschlüssel nicht während der Fahrt, sondern nur in der Stellung P abgezogen werden kann und daß in der Stellung P ein verschwenken des Wählhebels und somit ein Vorwählen der Getriebegänge unmöglich ist.

Es ist die Aufgabe der Erfindung, eine rein mechanisch wirkende, einfache und mißbrauchssichere Zündschlüsselverriegelung zu schaffen.

Eine Lösung dieser Aufgabe gelingt mit den kennzeichnenden Merkmalen des Anspruchs 1. Wenn an einem Zündschlüssel ein Seilzug befestigt ist, der in einem parallel zur Schwenkachse des Wählhebels gelagerten Sperrhebel angelenkt ist und über ihn einen Schwenkhebel unter eine Druckstange des Wählhebels verschwenkt, läßt sich eine Verriegelung des Wählhebels mit dem Zündschlüssel auf rein mechanischer Basis erreichen.

Ein Ausführungsbeispiel der Erfindung ist in der Zeichnung dargestellt und wird nachfolgend erläutert.

Es zeigen:

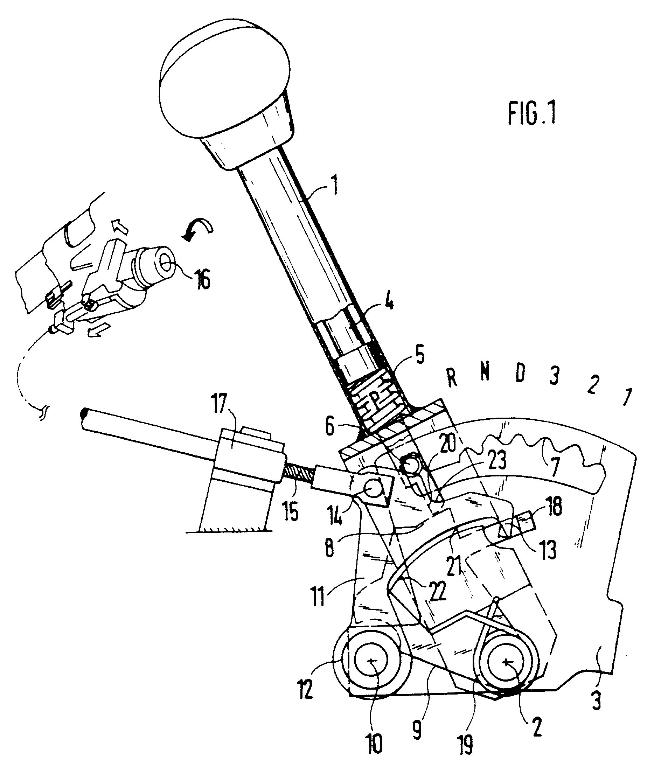

- Fig. 1: Verriegelungsvorrichtung bei abgezogenem Zündschlüssel - Stellung P
- Fig. 2: Verriegelungsvorrichtung bei fahrbereitem Getriebe
- Fig. 3: Verriegelungsvorrichtung mit entrastetem Wählhebel
- Fig. 4: Verriegelungvorrichtung bei Fahrt - Stellung D
- Fig. 5: Schnitt nach Linie V-V der Figur 4

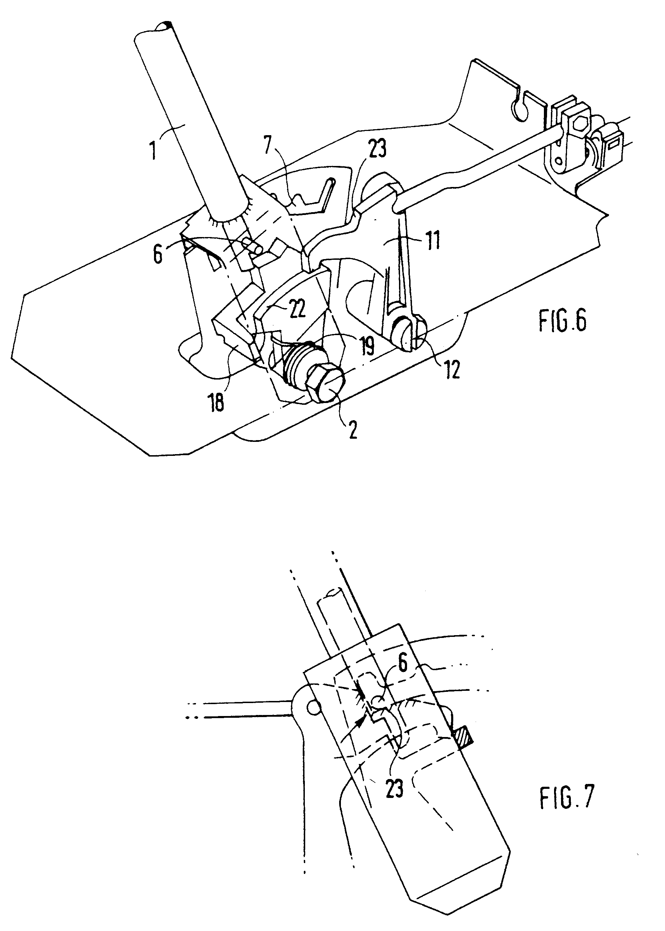

- Fig. 6: Räumliche Darstellung der Verriegelungsvorrichtung
- Fig. 7: Mißbrauchsicherung

Ein Wählhebel 1 eines Automatikgetriebes ist an einer Schwenkachse 2 eines karosseriefesten Schaltgehäuses 3 drehbar gelagert. Zentrisch im Wählhebel 1 ist eine Druckstange 4 längsgeführt und durch eine Feder 5 nach oben verspannt. Hierbei greift ein unten am Wählhebel 1 befestigter Querstift 6 in die P-Raste eines am Schaltgehäuse 3 ausgebildeten Rastprofils 7 zur Festlegung der Schwenklagen P, R, N, D, 3, 2, 1 ein. Ein Ausfahren aus der P-Stellung und Verschwenken des Wählhebels 1 durch manuelles Niederdrücken der Druckstange 4 ist nicht möglich, da die Druckstange 4 an ihrer Unterseite auf der Nockenkontur 8 eines Schwenkhebels 9 aufliegt, der auf der Schwenkachse 2 drehbar gelagert ist.

Seitlich zum Schwenkhebel 9 ist in einer zur Schwenkachse 2 parallelen Achse 10 ein Sperrhebel 11 gelagert. Er ist als rechteckiger Winkelhebel ausgebildet. Seine Lagerstelle 12 liegt am einen Schenkel, an dem anderen Schenkel ist eine Nase 13 zum Ausführen von Verriegelungsfunktionen angebracht. An seinem mittigen Eckpunkt liegt die Anlenkstelle 14 eines Seilzuges 15, der mit dem drehbaren Zündschlüssel 16 verbunden und durch dessen Drehen hin und her bewegbar ist. In der gezeichneten Lage ist der Zündschlüssel 16 abgezogen; der Seilzug 15 ist in seiner weitesten Ausfahrstellung aus der Seilzugführung 17. Bei dieser Ausfahrbewegung verschwenkt der Seilzug 17 den Sperrhebel 11 nach rechts. Seine Nase 13 drückt durch Anlage an dem Winkelanschlag 18 des Schwenkhebels diesen soweit nach rechts, bis die Nockenkontur 8 unter die Druckstange 4 gerückt ist. Somit wird ein Niederdrücken der Druckstange 4 und damit ein Einlegen der Getriebegänge unmöglich. Da in dieser Stellung kein Getriebegang gewählt werden kann, ist eine rein mechanisch wirkende Diebstahlsicherung realisiert.

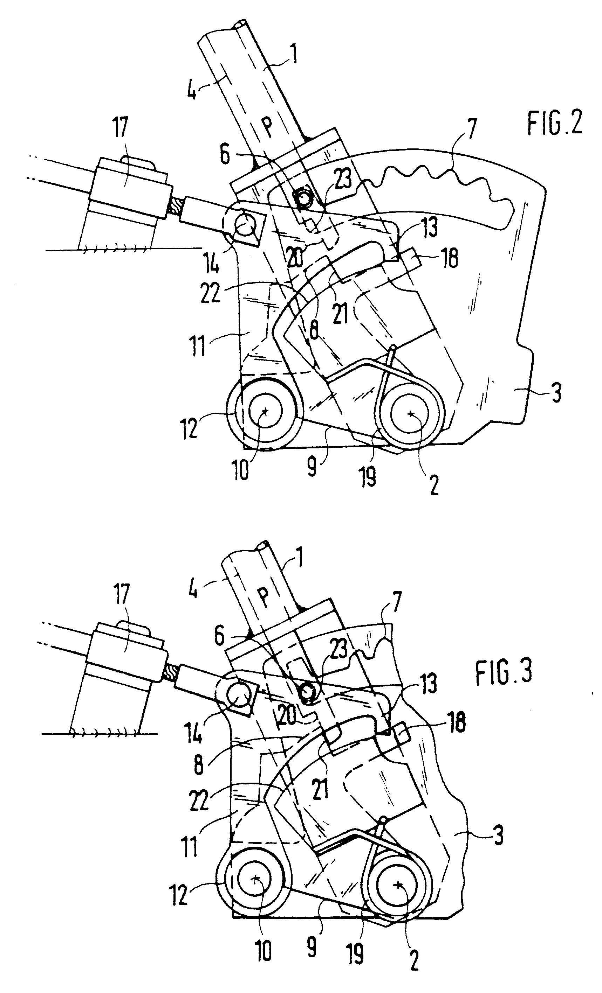

Ein Entriegeln aus der P-Raste ist erst in der Schwenklage nach Figur 2, Figur 3 und Figur 4 möglich. Durch Einstecken und Verdrehen des Zündschlüssels in dem Zündanlaßschalter wird die Anlenkstelle 14 in Richtung Seilzugführung 17 gezogen. Der Sperrhebel 11 wird dabei soweit nach links verschwenkt, bis die Druckstange 4 mit ihrer Gegenfläche 20 an dem Absatz 21 des Sperrhebels 11 entlanggleiten kann und somit die Wählstellungen R, N, D, 3, 2, 1 ausführbar sind. Hierbei gleitet eine am freien Ende des Schwenkhebels 9 ausgebildete Nase 13 auf einem am Wählhebel 1 fest angebrachten Kreissegment 22. Das Verschwenken des Schwenkhebels 9 sowie das Drehen und Abziehen des Zündschlüssels 16 ist bei diesen Wählstellungen daher nicht möglich.

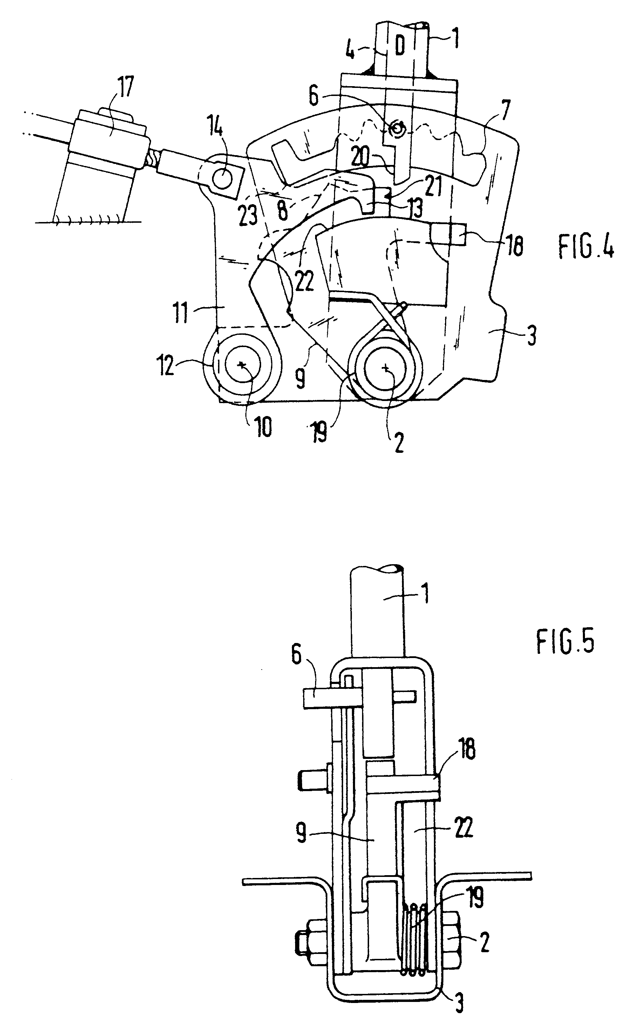

Wie Figur 5 deutlicher zeigt, ist der Sperrhebel 11 mit einem Winkelanschlag 18 versehen, der durch eine Torsionsfeder 19 an der Längsseite des an dieser Stelle als U-Profil ausgebildeten Wählhebels 1 in Anlage gehalten ist.

Um auszuschließen, daß die Verriegelungsvorrichtung durch gleichzeitiges Betätigen des Zündschlüssels 16 und der Wählhebel-Druckstange 4 außer Funktion gesetzt wird, ist eine Mißbrauchssicherung vorgesehen. Der Querstift 6 ist so lange ausgeführt, daß sein eines Ende in die Wählhebelrasten, sein anderes Ende in eine Rastnut 23 an der Oberseite des Sperrhebels 11 formschlüssig eingreifen kann.

## Patentansprüche

1. Vorrichtung zum Verriegeln des Zündschlüssels eines Kraftfahrzeuges mit einem schwenkbaren Wählhebel eines Kraftfahrzeug-Automatikgetriebes, der in seinen Wählstellungen (P, R, N, D, 3, 2, 1) mittels einer in ihm längsgeführten, federbelasteten Druckstange (4) verrastbar ist und aus der Verrastung durch Niederdrücken der Druckstange lösbar ist, und mit einem mit dem Zündschlüssel (16) gekoppelten Seilzug (15), an dem ein Sperrhebel (11) angelenkt ist, der parallel zur Schwenkachse (2) des Wählhebels (1) in einem Schaltgehäuse (3) gelagert ist, wobei in der einen Wählstellung (P) des Wählhebels (1) das Niederdrücken der Druckstange (4) verhindert wird, **dadurch gekennzeichnet**, daß auf der Schwenkachse (2) ein Schwenkhebel (9) drehbar gelagert ist, der bei Drehen des Zündschlüssels (16) vom Sperrhebel (11) so verschwenkt wird, daß er das Niederdrücken der Druckstange in der einen Wählstellung (P) verhindert.

2. Vorrichtung nach Anspruch 1, dadurch gekennzeichnet, daß das freie Ende des Sperrhebels (11) bei Durchfahren der Wählstellungen (R, N, D, 3, 2, 1) des Wählhebels (1) auf einem an ihm befestigten Kreissegment (22) aufliegt und so ein Drehen des Zündschlüssels (16) verhindert.

3. Vorrichtung nach Anspruch 1, dadurch gekennzeichnet, daß der Sperrhebel (11) als rechtwinkliger Winkelhebel gestaltet ist, am einen Schenkelende eine Drehlagerstelle (12), am freien Ende des anderen Schenkels eine Nase (13) zur Ausführung der Verriegelungen und am mittigen Eckpunkt die Anlenkstelle (14) des Seilzuges (15) aufweist.

4. Vorrichtung nach Anspruch 1 und 2, dadurch gekennzeichnet, daß ein seitlicher Winkelanschlag (18) des Schwenkhebels (9) an der Längsseite des Wählhebels (1) durch eine Torsionsfeder (19) in Anlage gehalten ist.

5. Vorrichtung nach Anspruch 1 und 4, dadurch gekennzeichnet, daß der Schwenkhebel (9) an seiner Oberseite einen rechtwinkligen Absatz (21) aufweist, an dem die niedergedrückte Druckstange (4) mit einer Gegenfläche (20) anliegt.

6. Vorrichtung nach Anspruch 1, dadurch gekennzeichnet, daß in der Druckstange (4) ein Querstift (6) befestigt ist, dessen eines Ende durch Eingreifen in ein Rastprofil (7) die Wählstellungen (P, R, N, D, 3, 2, 1) festlegt und dessen anderes Ende bei niedergedrückter Druckstange (4) formschlüssig in einer Rastnut (23) des Sperrhebels (11) eingreift.

## Claims

1. A device for locking the ignition of a motor vehicle by means of a tiltable selector lever of a motor vehicle automatic transmission, the said selector lever being engageable in its selector positions (P, R, N, D, 3, 2, 1) by means of a spring-loaded compression rod (4) longitudinally guided in the selector lever and being releasable from the engaged state by pushing the compression rod downwards, and by means of a cable (15) connected to the ignition (16), a locking lever (11) being articulated on the said cable (15) and being mounted in a transmission case (3) parallel to the pivot axis (2) of the selector lever (1), wherein the compression rod (4) is prevented from being pushed downwards in the selector position (P) of the selector lever (1), characterised in that a swivel lever (9) is pivotably mounted on the pivot axis (2) and, when the ignition (16) is turned, is pivoted by the locking lever (11) in such manner that it prevents the compression bar from being pushed downwards in the selector position (P).

2. A device according to claim 1, characterised in that, when moving through the selector positions (R, N, D, 3, 2, 1) of the selector lever (1), the free end of the locking lever (11) rests on a circular segment (22) fixed to the said selector lever (1) and thus prevents the ignition (16) from turning.

3. A device according to claim 1, characterised in that the locking lever (11) is formed as a right-angled lever, has a pivot bearing point (12) at the end of one arm, a projection (13) for executing the locking actions at the free end of the other arm and the articulation point (14) of the cable (15) at the central corner point.

4. A device according to claims 1 and 2, characterised in that a lateral angled stop (18) of the swivel lever (9) is held in contact with the longitudinal side of the selector lever (1) by a torsion spring (19).

5. A device according to claims 1 and 4, characterised in that the upper end of the swivel lever (9) has a right-angled shoulder (21), against which a counter-surface (20) of the pushed-down compression rod (4) rests.

6. A device according to claim 1, characterised in that a transverse pin (6) is mounted in the compression rod (4), one end of the said transverse pin (6) determining the selector positions (P, R, N, D, 3, 2, 1) by engaging in a locking profile (7) and the other end engaging positively in a locking groove (23) of the locking lever (11) when the compression rod (4) is pushed down.

## Revendications

1. Dispositif de verrouillage de la clé de contact d'un véhicule automobile avec un levier de sélection pivotant d'une boîte de vitesses automatique de véhicule, qui dans ses positions de sélection (P, R, N, D, 3, 2, 1) peut s'accrocher au moyen d'une tige de pression (4) soumise à l'action d'un ressort, guidé longitudinalement dans celui-ci, et qui peut être déverrouillé par abaissement de la tige de pression, et avec un câble Bowden (15) accouplé avec la clé de contact (16), sur lequel s'articule un levier de blocage (11), qui est monté parallèlement à l'axe de pivotement (2) du levier de sélection (1) dans une boîte de vitesses (3), dans une position de sélection (P) du levier de sélection (1) l'abaissement de la tige de pression (4) étant empêché, caractérisé en ce que sur l'axe de pivotement (2) est monté tournant un levier de pivotement (9), qui lors de la rotation de la clé de contact (16) est pivoté par le levier de blocage (11), de manière à empêcher l'abaissement de la tige de pression dans une position de sélection (P).

2. Dispositif sel on la revendication 1, caractérisé en ce que l'extrémité libre du levier de blocage (11) repose lors du passage à travers les positions de sélection (R, N, D, 3, 2, 1) du levier de sélection (1), sur un segment de cercle (22) fixé sur celui-ci, et empêche ainsi une rotation de la clé de contact (16).

3. Dispositif selon la revendication 1, caractérisé en ce que le levier de blocage (11) est un levier coudé à angle droit, en ce qu'il présente à une extrémité de branche un point d'appui tournant (12), à l'extrémité libre de l'autre branche un ergot (13) pour la réalisation des verrouillages, et au point d'angle central, le point d'articulation (14) du câble Bowden (15).

4. Dispositif selon les revendications 1 et 2, caractérisé en ce qu'une butée angulaire latérale (18) du levier de pivotement (19) est maintenue en application contre le côté longitudinal du levier de sélection (1), par un ressort de torsion (19).

5. Dispositif selon les revendications 1 et 4, caractérisé en ce que le levier de pivotement (9) présente, sur sa face supérieure, un gradin (21) à angle droit, contre lequel s'applique la tige de pression (4) abaissée avec une contre-surface (20).

6. Dispositif selon la revendication 1, caractérisé en ce que dans la tige de pression (4) est fixée une goupille transversale (6), dont une extrémité fixe les positions de sélection (P, R, N, D, 3, 2, 1), par engagement dans un profilé d'arrêt (7) et dont l'autre extrémité s'engage par concordance de forme dans une rainure d'arrêt (23) du levier de blocage (11), lorsque la tige de pression (4) est abaissée.
